# DEMANDE DE BREVET EUROPEEN

(11) **EP 1 908 638 A1**
(43) Date de publication de la demande: **09.04.2008**
(21) Numéro de dépôt: 07291149.8
(22) Date de dépôt: 26.09.2007
(51) Int. Cl.: B60R 13/08, F01N 7/10, F01N 7/14

(54) **Dispositif de protection acoustique et thermique**

(30) Priorité: 27.09.2006 FR 0608494
(71) Demandeur: Centre d'etude et de recherche pour l'automobile (CERA), 51100 Reims (FR)
(72) Inventeur: Lhuillier, Pierre, 51000 Chalons en Champagne (FR); Vitrant, Olivier, 51100 Reims (FR); Choquart, François, 51100 Reims (FR)
(74) Mandataire: Sayettat, Julien Christian

(57) **Abrégé**

L'invention concerne un dispositif (1) de protection acoustique et thermique vis à vis d'une source (2) sonore et chaude disposée dans un véhicule automobile, ledit dispositif comprenant une coque (3) autoportante à base de feutre de verre thermocomprimé lié par une résine thermodurcissable, ladite coque étant associée à une feuille (4) métallique externe, ladite coque étant associée en outre, sur au moins une partie de sa surface interne, à un complexe (5) souple d'absorption acoustique, ledit complexe comprenant une couche absorbante (6) à base de feutre de verre, la face interne de ladite couche étant associée à une couche de protection (7) poreuse.

## Description

L'invention concerne un dispositif de protection acoustique et thermique vis à vis d'une source sonore et chaude et un ensemble comprenant une source sonore et chaude et un tel dispositif.

Il est connu de réaliser un dispositif de protection acoustique et thermique vis à vis d'une source sonore et chaude disposée dans un véhicule automobile, ledit dispositif comprenant une coque autoportante, permettant une isolation acoustique, à base de feutre de verre thermocomprimé lié par une résine thermodurcissable, notamment phénolique, ladite coque étant associée à une feuille métallique externe de réflexion thermique, notamment en aluminium.

Un tel dispositif, du fait de la rigidité de la coque, ne permet pas d'assurer une bonne absorption acoustique.

L'invention a pour but d'améliorer les dispositifs existant en matière de protection acoustique.

A cet effet, et selon un premier aspect, l'invention propose un dispositif de protection acoustique et thermique vis à vis d'une source sonore et chaude disposée dans un véhicule automobile, ledit dispositif comprenant une coque autoportante à base de feutre de verre thermocomprimé lié par une résine thermodurcissable, ladite coque étant associée à une feuille métallique externe, ladite coque étant associée en outre, sur au moins une partie de sa surface interne, à un complexe souple d'absorption acoustique, ledit complexe comprenant une couche absorbante à base de feutre de verre, la face interne de ladite couche étant associée à une couche de protection poreuse.

De la sorte, on obtient, de par la présence de la couche absorbante, des propriétés d'absorption acoustique. Ladite couche permet en outre d'assurer une isolation thermique. On notera que la porosité de la couche de protection permet une pénétration des ondes sonores dans la couche absorbante.

La source sonore et chaude est par exemple formée d'une ligne d'échappement.

Dans cette description, les termes de positionnement dans l'espace sont pris en référence au dispositif monté sur véhicule, la partie interne du dispositif correspondant à celle non visible, disposée en regard de la source sonore et chaude.

Selon un deuxième aspect, l'invention propose un ensemble comprenant une source sonore et chaude et un tel dispositif, ledit dispositif présentant une géométrie complémentaire de celle de ladite source et étant fixé solidairement à ladite source de sorte que la couche de protection soit en contact avec ladite source.

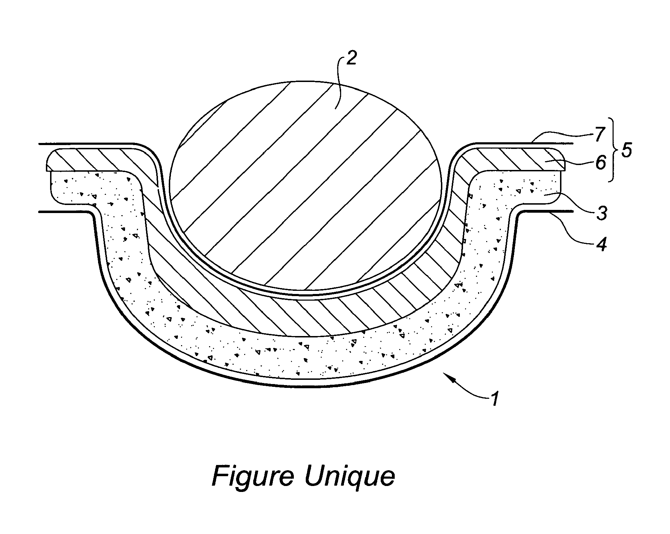

D'autres particularités et avantages de l'invention apparaîtront dans la description qui suit, faite en référence à la figure jointe qui est une représentation schématique en coupe d'un dispositif disposé à proximité d'une source sonore et chaude.

En référence à la figure, on décrit à présent un dispositif 1 de protection acoustique et thermique vis à vis d'une source 2 sonore et chaude disposée dans un véhicule automobile, ledit dispositif comprenant une coque 3 autoportante à base de feutre de verre thermocomprimé lié par une résine thermodurcissable, notamment phénolique, ladite coque étant associée, notamment par la résine, à une feuille 4 métallique externe, ladite coque étant associée en outre, sur au moins une partie de sa surface interne, à un complexe 5 souple d'absorption acoustique, ledit complexe comprenant une couche absorbante 6 à base de feutre de verre, la face interne de ladite couche étant associée à une couche poreuse de protection 7 de ladite couche absorbante.

Le complexe 5 peut recouvrir la totalité de la surface interne ou seulement une partie, sous forme de « patches ».

Selon une réalisation, la feuille 4 métallique est à base d'aluminium, son épaisseur étant notamment inférieure à 130 microns.

Selon une réalisation, la couche de protection 7 est à base de tissu ou de feutre de verre, qui présente la porosité requise.

Selon une réalisation, le complexe 5 est associé à la coque 3 par couture, notamment par fil de verre.

Selon une réalisation, le complexe 5 est surmoulé par la coque 3, notamment lors de la thermocompression mise en oeuvre pour réaliser ladite coque.

D'autres moyens d'association du complexe 5 à la coque 3 peuvent être envisagés, tels que le collage, le rivetage, etc...

Dans un ensemble comprenant une source 2 sonore et chaude et un dispositif 1, ledit dispositif peut avantageusement présenter une géométrie complémentaire de celle de ladite source et être fixé solidairement à ladite source, par des moyens de fixation non représentés, de sorte que la couche de protection 7 soit en contact avec ladite source, voire en légère compression contre elle, de sorte à minimiser le rayonnement acoustique et éviter les effets de fuites acoustiques.

On notera que la couche d'absorption 7, du fait de sa souplesse et de sa faculté à s'écraser, permet de garantir ce contact malgré les dispersions dimensionnelles de montage.

## Revendications

1. Dispositif (1) de protection acoustique et thermique vis à vis d'une source (2) sonore et chaude disposée dans un véhicule automobile, ledit dispositif comprenant une coque (3) autoportante à base de feutre de verre thermocomprimé lié par une résine thermodurcissable, ladite coque étant associée à une feuille (4) métallique externe, ledit dispositif étant **caractérisé en ce que** ladite coque est associée en outre, sur au moins une partie de sa surface interne, à un complexe (5) souple d'absorption acoustique, ledit complexe comprenant une couche absorbante (6) à base de feutre de verre, la face interne de ladite couche étant associée à une couche de protection (7) poreuse.

2. Dispositif selon la revendication 1, la feuille (4) métallique étant à base d'aluminium.

3. Dispositif selon la revendication 1 ou 2, la couche de protection (7) étant à base de tissu ou de feutre de verre.

4. Dispositif selon l'une quelconque des revendications 1 à 3, le complexe (5) étant associé à la coque (3) par couture.

5. Dispositif selon l'une quelconque des revendications 1 à 3, le complexe (5) étant surmoulé par la coque (3).

6. Ensemble comprenant une source (2) sonore et chaude et un dispositif selon l'une quelconque des revendications 1 à 5, ledit dispositif présentant une géométrie complémentaire de celle de ladite source et étant fixé solidairement à ladite source de sorte que la couche de protection (7) soit en contact avec ladite source.
